# FASCICULE DE BREVET EUROPEEN

(11) **EP 4 409 548 B1**
(45) Date de publication et mention de la délivrance du brevet: **04.06.2025**
(21) Numéro de dépôt: 22761956.6
(22) Date de dépôt: 01.08.2022
(51) Int. Cl.: G06F 21/32, G06T 7/70, G06V 40/16, G06V 40/40, G06F 3/01, G06T 3/02, G06V 40/60

(54) **PROCÉDÉ D'IMAGERIE D'UNE PARTIE DE CORPS D'UN UTILISATEUR, PROCÉDÉ ANTI-REJEU D'UN DÉPLACEMENT D'UNE PARTIE DE CORPS ET PRODUIT PROGRAMME D'ORDINATEUR ASSOCIÉ**
VERFAHREN ZUR ABBILDUNG EINES KÖRPERTEILS EINES BENUTZERS, ANTI-WIEDERGABEVERFAHREN FÜR EINE BEWEGUNG EINES KÖRPERTEILS UND ZUGEHÖRIGES COMPUTERPROGRAMM
METHOD FOR IMAGING A USER'S BODY PART, ANTI-REPLAY METHOD FOR A MOVEMENT OF A BODY PART AND ASSOCIATED COMPUTER PROGRAM

(30) Priorité: 27.09.2021 FR 2110177
(43) Date de publication de la demande: 07.08.2024
(73) Titulaire: IDEMIA Public Security France, 92400 Courbevoie (FR)
(72) Inventeur: THIEBOT, Alain, 92400 Courbevoie (FR); BEAUDET, Jean, 92400 Courbevoie (FR); DOUBLET, Julien, 92400 Courbevoie (FR); FOURRE, Joël Yann, 92400 Courbevoie (FR)
(74) Mandataire: IPS
(86) Numéro de dépôt international: PCT/EP2022/071571
(87) Numéro de publication internationale: WO 2023/046344

(56) Documents cités:
- US-A1- 2019 080 189
- US-A1- 2020 296 132

## Description

L'invention concerne le domaine des procédés et dispositifs électroniques d'imagerie d'une partie du corps d'un utilisateur, en particulier un visage, un ou plusieurs iris, une main ou un doigt pour des applications de construction de modèle en trois dimensions ou en vue d'une authentification dudit utilisateur, par exemple pour un droit d'accès à un bien ou un service ou une zone géographique et/ou en vue de vérifier que l'utilisateur est réel, vivant et légitime.

Il est connu de l'état de la technique des dispositifs d'imagerie de construction de modèle en trois dimensions ou d'authentification qui requièrent que l'utilisateur présente une partie de corps selon plusieurs positions. Ces dispositifs affichent par exemple sur un écran d'affichage un modèle à suivre par l'utilisateur. Selon un mode de réalisation connu, il est affiché sur un écran le visage d'un robot qui fait des mouvements de basculement de la tête de haut en bas, puis de gauche à droite. L'utilisateur doit reproduire devant le dispositif électronique d'imagerie les mêmes mouvements de tête que ceux effectués par le robot.

Ces dispositifs ne mettent pas en œuvre des procédés intuitifs pour l'utilisateur qui peut trouver fastidieux et pénible de devoir suivre une cible ou reproduire des mouvements pour s'enregistrer dans une base de données ou pour accéder à une zone ou un service après s'être enregistré. Il est également fréquent que des utilisateurs non habitués aux produits électroniques ne comprennent pas du tout les instructions à suivre. Lorsque les mouvements à reproduire sont toujours les mêmes, le dispositif d'imagerie peut être trompé par un rejeu d'une utilisation précédente.

Selon un autre exemple, il est connu d'afficher sur un écran d'affichage d'un dispositif électronique d'imagerie, une cible que l'utilisateur doit suivre des yeux et/ou de la tête.

Il est également connu d'afficher sur un écran d'affichage un gabarit de contour de visage mobile sur l'écran d'affichage et/ou variable en dimensions. L'utilisateur doit bouger la tête par rapport à l'écran d'affichage et/ou s'en rapprocher ou s'en éloigner de manière à ce que son visage reste inscrit dans le gabarit de contour de visage affiché.

Ces dispositifs d'imagerie incitent l'utilisateur au mouvement et permettent par exemple de vérifier que l'utilisateur est une personne vivante et que ce n'est pas une photographie qui est présentée devant le dispositif électronique d'imagerie. En effet, de tels dispositifs d'imagerie peuvent être utilisés en vue de l'authentification d'un utilisateur légitime, pour un droit d'accès à un bien ou un service ou une zone géographique.

Ces dispositifs ne mettent pas en œuvre des procédés intuitifs pour l'utilisateur qui peut trouver fastidieux et pénible de devoir suivre une cible pour prouver sa légitimité. L'utilisateur légitime peut même trouver désagréable de devoir prouver sa légitimité à un dispositif électronique, ou ne pas comprendre quel mouvement réaliser.

Certains dispositifs comprennent plusieurs caméras pour pouvoir imager une partie de corps en trois dimensions, par exemple une extrémité de doigt selon différents angles de vue pour imager une empreinte digitale complète, ou une main, pour imager à la fois la paume de main et la paume de l'écrivain.

De tels dispositifs sont coûteux et volumineux de par la pluralité des caméras qui y est embarquée.

US 2020/296132 A1 décrit un procédé pour détecter une usurpation d'identité biométrique et/ ou valider une correspondance de reconnaissance d'identité en utilisant la caméra d'un appareil mobile, traiter l'image du visage de l'utilisateur ou un ensemble d'images à une première et une seconde distance pour générer des première et seconde représentations de données, traiter la première représentation de données dans un modèle prédictif, et comparer la représentation de données avec le modèle prédictif.

US 2019/080189 A1 décrit un appareil avec une interface utilisateur avec des conseils pour effectuer un enrôlement biométrique.

L'invention vise à résoudre les problèmes susmentionnés de l'état de la technique en proposant un procédé d'imagerie à la fois intuitif et fiable pour l'utilisateur, et agréable à l'utilisation, qui ne perturbe pas l'utilisateur. L'invention permet en outre une vérification de légitimité fiable et discrète d'un utilisateur par une mise en œuvre d'un procédé anti-rejeu fiable et peu perceptible par l'utilisateur.

L'invention porte sur un procédé d'imagerie d'une partie de corps d'un utilisateur selon la revendication 1.

Selon un aspect de l'invention, la première image est sauvegardée dans une mémoire du dispositif électronique.

Selon un aspect de l'invention, la deuxième image est sauvegardée dans une mémoire du dispositif électronique.

Selon un aspect de l'invention, la position de ladite partie de corps dans la deuxième image est différente de la deuxième position.

Selon un aspect de l'invention, l'étape de traitement prend fin suite à l'acquisition de la deuxième image dans l'étape de deuxième acquisition.

Selon un aspect de l'invention, l'étape de deuxième acquisition comprend l'acquisition d'une pluralité de deuxièmes images par le dispositif de capture vidéo, la position de la partie de corps dans chaque deuxième image étant différente.

Ainsi, toutes les positions de la partie de corps dans les deuxièmes images sont différentes les unes des autres.

Selon un aspect de l'invention, la pluralité de deuxièmes images est sauvegardée dans une mémoire du dispositif électronique.

Selon un aspect de l'invention, l'étape de traitement prend fin lorsque la position de ladite partie de corps sur la deuxième image correspond à une troisième position prédéterminée différente de la deuxième position.

Selon un aspect de l'invention, l'étape de traitement prend fin lorsque le nombre de deuxièmes images dépasse un seuil prédéterminé.

Selon un aspect de l'invention, la deuxième position correspond à un agrandissement ou une réduction de dimension de la partie de corps dans la première image, un changement de positionnement de ladite partie de corps depuis la première position et selon ladite consigne prédéterminée de positionnement correspondant à un rapprochement ou un éloignement de la partie de corps vis-à-vis du dispositif de capture vidéo.

Selon un aspect de l'invention, la deuxième position correspond à un décentrage de ladite partie de corps dans la première image, un changement de positionnement de ladite partie de corps depuis la première position et selon ladite consigne prédéterminée de positionnement correspondant à un déplacement de la partie de corps vis-à-vis du dispositif de capture vidéo dans un plan orthogonal à une ligne de visée dudit dispositif de capture vidéo.

La ligne de visée correspond à un axe optique du dispositif de capture vidéo.

Selon un aspect de l'invention, la deuxième position correspond à une rotation de ladite partie de corps dans la première image, un changement de positionnement de ladite partie de corps depuis la première position et selon ladite consigne prédéterminée de positionnement correspondant à un déplacement rotatif de la partie de corps vis-à-vis du dispositif de capture vidéo.

Selon un aspect de l'invention, la deuxième position résulte d'une transformation prise seule ou en combinaison de :
- un agrandissement ou une réduction de dimension de la partie de corps dans la première image,
- un décentrage de ladite partie de corps dans la première image,
- une rotation de ladite partie de corps dans la première image.

Par exemple, une transformation peut être une combinaison d'un agrandissement et d'un décentrage.

Selon un aspect de l'invention, la consigne prédéterminée de positionnement de ladite partie de corps de l'utilisateur comprend l'affichage sur l'écran d'affichage, en superposition, d'une cible de positionnement dont la localisation et la dimension sont fixes par rapport audit écran d'affichage.

Selon un aspect de l'invention, la deuxième position est déterminée en fonction d'une consigne d'un dispositif anti-fraude et/ou d'un dispositif de modélisation en trois dimensions et/ou d'un dispositif de construction de données biométriques.

Un dispositif anti-fraude permet de vérifier qu'un utilisateur ne fraude pas, en particulier en ce que la partie de corps de l'utilisateur à imager est vivante et réelle, par vérification dans des images par exemple de détails de la peau, d'un environnement cohérent de ladite partie de corps, de la visibilité tridimensionnelle de ladite partie de corps pour détecter une fraude plane.

L'environnement de la partie de corps comprend l'interface entre la partie de corps et l'environnement ainsi que l'environnement plus lointain qui apparaît sur l'écran d'affichage.

Un environnement n'est par exemple pas cohérent si la partie de corps et l'environnement ont des proportions inattendues selon un mouvement de la partie de corps. Selon un aspect de l'invention, la deuxième position est déterminée en fonction d'une donnée aléatoire ou pseudo aléatoire.

Selon un aspect de l'invention, ladite partie de corps est d'une catégorie définie, la deuxième position est déterminée en fonction de la catégorie de ladite partie de corps.

Selon un aspect de l'invention, les étapes de première acquisition, de caractérisation, de détermination, de traitement et de deuxième acquisition sont itérées plusieurs fois.

Selon un aspect de l'invention, la deuxième position d'une itération du procédé d'imagerie est déterminée en fonction de la deuxième position dans l'itération du procédé d'imagerie précédente, ou d'un historique des deuxièmes positions dans les itérations du procédé d'imagerie précédentes.

Selon un aspect de l'invention, la deuxième position d'une itération du procédé d'imagerie est déterminée en fonction de la position de ladite partie de corps sur la deuxième image ou sur une deuxième image prédéterminée d'une pluralité de deuxième images de l'étape de deuxième acquisition dans l'itération du procédé d'imagerie précédente, ou d'un historique des positions de ladite partie de corps sur la deuxième image ou sur une deuxième image prédéterminée d'une pluralité de deuxième images de l'étape de deuxième acquisition des itérations du procédé d'imagerie précédentes.

Selon un aspect de l'invention, la position de ladite partie de corps sur la deuxième image prédéterminée correspond à la troisième position.

Selon un aspect de l'invention, le nombre d'itérations est fonction d'une instruction d'un dispositif anti-fraude et/ou d'un dispositif de modélisation en trois dimensions et/ou d'un dispositif de construction de données biométriques.

Selon un aspect de l'invention, le nombre d'itérations est fonction de l'écoulement d'une durée prédéterminée.

Selon un aspect de l'invention, le dispositif de capture vidéo est apte à acquérir des images d'empreintes biométriques de ladite partie de corps de l'utilisateur, la première image et au moins une deuxième image étant des images d'empreintes biométriques.

Une image d'empreinte biométrique est par exemple une image d'un réseau de crêtes et/ou sillons de la peau, d'une main, d'un doigt, d'un visage, de motifs d'un iris, en vue de l'authentification d'un utilisateur par la comparaison de leur forme, caractéristiques et/ou couleur à un modèle de référence enregistré dans une base de données.

Selon un aspect de l'invention, ladite partie de corps est un visage.

Selon un aspect de l'invention, ladite partie de corps est une main, en particulier une paume de main.

Selon un aspect de l'invention, ladite partie de corps est une portion de main, en particulier un doigt ou une extrémité d'un doigt.

Selon un aspect de l'invention, ladite partie de corps est un iris ou les deux iris d'un visage.

L'invention porte également sur un procédé anti-rejeu d'un déplacement d'une partie de corps selon la revendication 14.

La cohérence du changement de la position de la partie de corps permet de vérifier que l'utilisateur est une vraie personne qui autocorrige le positionnement de ladite partie de corps en fonction de ce qui est affiché sur l'écran d'affichage et d'une consigne de positionnement, et que l'utilisateur ne diffuse pas devant le dispositif électronique une vidéo enregistrée d'une précédente exécution du procédé d'imagerie ou une vidéo enregistrée avec des changements de positionnement de ladite partie de corps selon des positions aléatoires.

Des méthodes de contrôle de la cohérence sont connues de l'état de la technique et ne sont pas décrites ici.

L'invention porte également sur un produit programme d'ordinateur selon la revendication 15.

D'autres avantages et caractéristiques de l'invention apparaîtront à la lecture de la description et des dessins.
La figure 1a représente un utilisateur tenant un dispositif électronique mobile comprenant un calculateur.
La figure 1b représente un utilisateur à proximité d'un dispositif électronique fixe et un calculateur implémenté dans un serveur distant.
La figure 2a représente un dispositif électronique comprenant un écran d'affichage sur lequel est affiché un visage d'un utilisateur et un gabarit de contour de visage affiché en superposition.
La figure 2b représente un dispositif électronique comprenant un écran d'affichage sur lequel est affiché un visage d'un utilisateur et un marqueur affiché en superposition.
La figure 3 illustre les étapes d'un procédé d'imagerie selon l'invention.
La figure 4 illustre les étapes d'un procédé anti-rejeu selon l'invention.
La figure 5a représente une image d'un retour vidéo réel du visage d'un utilisateur positionné selon une consigne de positionnement prédéterminée de centrage de visage sur l'écran.
La figure 5b représente une première image d'un visage dans une première position.
La figure 6a représente une image du visage dans une deuxième position décentrée par rapport à la première position.
La figure 6b représente une image d'un retour vidéo biaisé du visage de l'utilisateur positionné tel que sur la figure 5b, après modification dans l'image par le calculateur de la position du visage suivant une transformation de décentrage.
La figure 7a représente une image du visage dans une deuxième position agrandie en dimension par rapport à la première position.
La figure 7b représente une image d'un retour vidéo biaisé du visage de l'utilisateur positionné tel que sur la figure 5b, après modification dans l'image par le calculateur de la position du visage suivant une transformation de réduction de dimension.
La figure 8a représente une image du visage dans une deuxième position inclinée vers la gauche par rapport à la première position.
La figure 8b représente une image d'un retour vidéo biaisé du visage de l'utilisateur positionné tel que sur la figure 5b, après modification dans l'image par le calculateur de la position du visage suivant une transformation de rotation plane vers la droite.
La figure 9a représente une image du visage dans une deuxième position tournée vers la gauche par rapport à la première position.
La figure 9b représente une image d'un retour vidéo biaisé du visage de l'utilisateur positionné tel que sur la figure 5b, après modification dans l'image par le calculateur de la position du visage suivant une transformation de rotation axiale vers la droite.
La figure 10a représente un utilisateur tenant dans sa main un dispositif électronique mobile avant ou en début d'une exécution du procédé d'imagerie selon l'invention.
La figure 10b représente l'utilisateur de la figure 10a autocorrigeant la position de son visage suite à un retour vidéo biaisé sur l'écran d'affichage du dispositif électronique selon l'exécution du procédé d'imagerie selon l'invention.
La figure 11a représente un utilisateur à proximité d'un dispositif électronique fixe avant ou en début d'une exécution du procédé d'imagerie selon l'invention.
La figure 11b représente l'utilisateur de la figure 11a autocorrigeant la position de son visage suite à un retour vidéo biaisé sur l'écran d'affichage du dispositif électronique selon l'exécution du procédé d'imagerie selon l'invention.

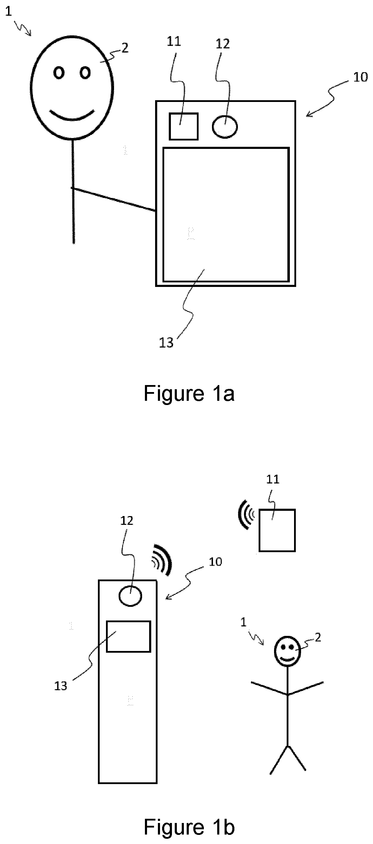

Les figures 1a et 1b représentent un système comprenant un calculateur 11, et un dispositif électronique 10 comportant un dispositif de capture vidéo 12 et un écran d'affichage 13.

Un dispositif électronique 10 peut être mobile par rapport à l'environnement de l'utilisateur 1 tel qu'un téléphone portable comme représenté sur la figure 1a.

Un dispositif électronique 10 peut être fixe par rapport à l'environnement de l'utilisateur 1, par exemple posé sur le sol, une table ou fixé sur un mur, tel qu'une borne d'acquisition comme représentée sur la figure 1b.

Le calculateur 11 peut être embarqué sur le dispositif électronique 10, tel que représenté sur la figure 1a ou bien déporté sur un serveur externe, tel que représenté sur la figure 1b.

Que le dispositif électronique 10 soit fixe ou mobile, le calculateur 11 peut être embarqué ou déporté, les figures 1a et 1b ne sont que des exemples de réalisation de système.

Lorsque le calculateur 11 est déporté sur un serveur, les échanges d'informations entre le calculateur 11 et le dispositif électronique sont font soit par des moyens de transmission sans contact par exemple par ondes radio ou des réseaux optiques, soit par des moyens de transmission filaires si le dispositif électronique 10 n'est pas trop éloigné du calculateur 11.

Le dispositif de capture vidéo 12 est apte à acquérir des images et des vidéos d'une partie de corps 2 d'un utilisateur 1.

La partie de corps 2 d'un utilisateur est par exemple un visage, un ou plusieurs doigts d'une main, la paume d'une main, une main entière, un ou plusieurs iris.

L'écran d'affichage 13 est apte à afficher des images prises par le dispositif de capture vidéo 12, modifiées ou non par le calculateur 11.

Ainsi, l'écran d'affichage 13 est apte à afficher un retour vidéo réel d'un flux vidéo d'images acquises par le dispositif de capture vidéo 12, mais il est aussi apte à afficher un retour vidéo biaisé d'images acquises par le dispositif de capture vidéo 12 puis modifiées par le calculateur 11.

L'invention concerne un procédé d'imagerie d'une partie de corps 2 d'un utilisateur 1 selon une consigne prédéterminée de positionnement.

L'utilisateur 1 est apte à positionner ladite partie de son corps selon une consigne prédéterminée de positionnement en fonction d'un retour vidéo affiché sur l'écran d'affichage 13.

Si le retour vidéo sur l'écran d'affichage 13 est réel, ladite partie du corps 2 de l'utilisateur 1 est positionnée par rapport au dispositif de capture vidéo 12 tel qu'affiché sur l'écran d'affichage 13.

Si le retour vidéo sur l'écran d'affichage 13 est biaisé, ladite partie du corps 2 de l'utilisateur 1 n'est pas positionnée par rapport au dispositif de capture vidéo 12 tel qu'affiché sur l'écran d'affichage 13. Avantageusement, l'utilisateur 1 n'est pas informé que le retour vidéo affiché sur l'écran d'affichage est biaisé.

La consigne prédéterminée de positionnement peut être une consigne vocale ou visuelle.

La consigne prédéterminée de positionnement peut être implicite ou explicite.

Une consigne prédéterminée de positionnement implicite est typiquement un centrage sur l'écran d'affichage 13, de la partie de corps de l'utilisateur.

Une consigne prédéterminée de positionnement explicite comprend par exemple un affichage en superposition d'un retour vidéo réel ou baisé, sur l'écran d'affichage 13.

Selon un exemple préférentiel de réalisation, la consigne prédéterminée de positionnement comprend l'affichage sur l'écran d'affichage 13 d'une cible 30 de positionnement dont la localisation et la dimension sont fixes par rapport audit écran d'affichage 13.

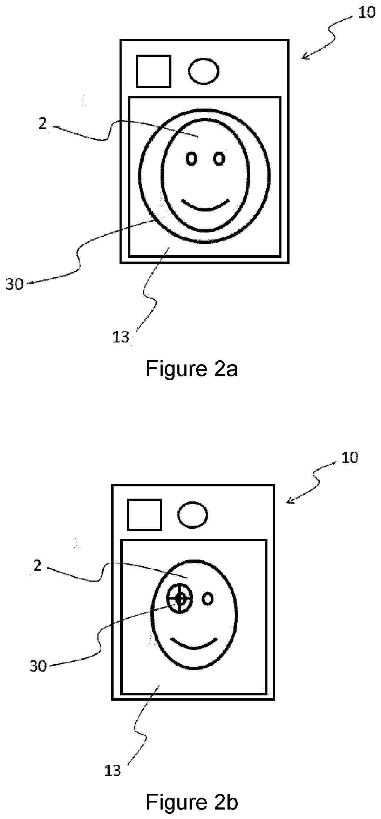

Sur la figure 2a, la partie de corps 2 est un visage et la cible 30 est un gabarit de contour de visage. Selon la consigne prédéterminée de positionnement, l'utilisateur 1 doit positionner son visage de manière à faire correspondre au mieux le contour de son visage avec le gabarit de contour de visage affiché en superposition sur l'écran d'affichage 13.

Sur la figure 2b, la partie de corps 2 est un visage et la cible 30 est un marqueur. Selon la consigne prédéterminée de positionnement, l'utilisateur 1 doit positionner son œil droit sur le marqueur affiché en superposition sur l'écran d'affichage 13.

Le marqueur et le gabarit de contour de visage sont des exemples non limitatifs de réalisation d'une cible 30.

Avantageusement, la localisation et la dimension de la cible 30 sont fixes par rapport à l'écran d'affichage 13. Ainsi, que le retour vidéo affiché sur l'écran d'affichage 13 soit réel ou biaisé, la position et la taille de la cible 30 reste inchangées sur l'écran d'affichage 13.

Avantageusement, la consigne prédéterminée de positionnement est identique pendant toute l'exécution du procédé d'imagerie.

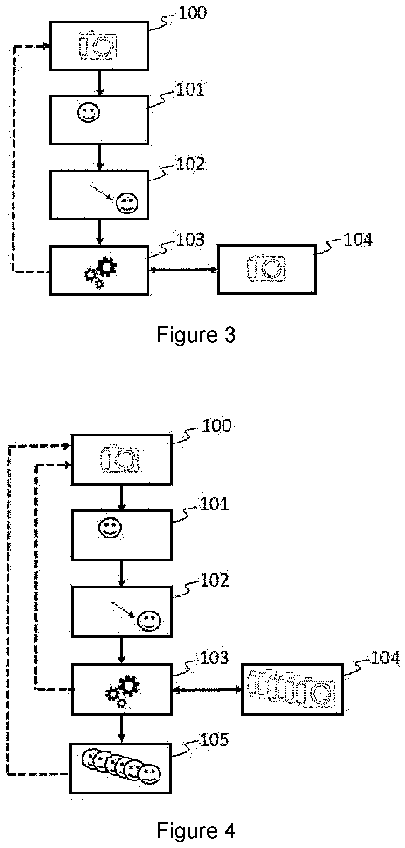

Le procédé d'imagerie d'une partie de corps 2 d'un utilisateur 1 comprend plusieurs étapes tel que représenté sur la figure 3.

De manière préférentielle et tel que décrit dans la description du procédé qui est faite ci-dessous, la partie de corps est un visage. Cela n'est pas limitatif, le procédé est applicable à tout autre partie d'un corps d'un utilisateur.

Selon une étape de première acquisition 100, le dispositif de capture vidéo 12 acquiert une première image comprenant ladite partie de corps 2 de l'utilisateur.

Par exemple, le dispositif de capture vidéo 12 acquiert des images de la partie de corps 2 de l'utilisateur 1 qui sont affichées en retour vidéo réel, sur l'écran d'affichage 13. L'utilisateur 1 a pour consigne de positionner son visage selon une consigne prédéterminée de positionnement, par exemple de manière à faire correspondre le contour de son visage tel qu'affiché sur ledit retour vidéo avec un gabarit de visage fixe affiché en superposition sur l'écran d'affichage 13. Le dispositif de capture vidéo 12 acquiert une première image comprenant ladite partie de corps 2 de l'utilisateur 1.

Avantageusement, le dispositif de capture vidéo 12 acquiert une première image lorsque ladite partie de corps 2 est positionnée selon ladite consigne prédéterminée de positionnement.

Cependant, alternativement, le dispositif de capture vidéo 12 peut acquérir une première image comprenant ladite partie de corps 2 de l'utilisateur 1 alors que ladite partie de corps 2 n'est pas positionnée selon ladite consigne prédéterminée de positionnement, par exemple parce-que la position de la partie de corps de l'utilisateur est pertinente pour le dispositif électronique 10 ou qu' une période de temps prédéterminée s'est écoulée.

Une position pertinente est une position dont l'image associée est utile pour la construction d'un modèle en trois dimensions, pour une authentification dudit utilisateur et/ou pour une vérification de légitimité d'un utilisateur.

Selon une étape de caractérisation 101, le calculateur 11 caractérise une première position de la partie de corps 2 de l'utilisateur, dans la première image.

Une position d'une partie de corps peut-être :
- une orientation ou posture de la partie de corps dans l'image,
- et/ou une localisation de la partie de corps dans l'image,
- et/ou une dimension de la partie de corps dans l'image représentant une proximité de la partie de corps par rapport au dispositif de capture vidéo 12.

Selon un exemple, le calculateur 11 caractérise l'orientation de la partie de corps de l'utilisateur dans la première image. Un visage d'un utilisateur peut être orienté de face, de trois-quarts, de côté, selon un angle particulier, selon une posture de port de tête droit, haut, bas ou faisant un angle particulier par rapport au port de tête droit. Par exemple, la première position est une orientation de face.

Selon un autre exemple, le calculateur 11 caractérise la localisation de la partie de corps de l'utilisateur dans la première image. La partie de corps peut être centrée, décentrée vers la droite, la gauche, le haut, le bas dans la première image. La localisation de ladite partie de corps peut être caractérisée par rapport à un point de référence prédéterminé dans la première image, par exemple le centre ou par rapport à une localisation d'une consigne de positionnement affichée sur l'écran d'affichage 13, en particulier une cible 30. Par exemple, la première position est une localisation centrée dans l'image.

Selon un autre exemple, le calculateur 11 caractérise la dimension de la partie de corps de l'utilisateur dans la première image. La partie de corps peut occuper plus ou moins de surface dans la première image ou bien être plus petite ou plus grande par rapport à un gabarit affiché en superposition sur l'écran d'affichage 13. Par exemple, la première position est une dimension sensiblement égale à la dimension d'un gabarit, par exemple la cible 30. La dimension peut aussi est associée à un facteur de grandissement de dispositif de capture vidéo 12. Par exemple, la première position est une dimension de facteur de grandissement 100% du dispositif de capture vidéo 12.

Selon une étape de caractérisation 102, le calculateur 11 détermine une deuxième position de ladite partie de corps de l'utilisateur différente de la première position.

Par exemple, la première position d'un visage est une orientation de face. La deuxième position est une orientation de trois-quarts.

Par exemple, la première position d'un visage est une localisation centrée dans une image. La deuxième position est une localisation excentrée vers la droite dans une image.

Par exemple, la première position d'un visage est une dimension de visage dans une image sensiblement égale à celle d'un gabarit affiché en superposition de ladite image sur l'écran d'affichage 13. La deuxième position est une dimension de visage multipliée par un facteur de grandissement de 150% par rapport à la première position et audit gabarit.

Selon une étape de traitement 103, le calculateur 11 récupère un flux vidéo d'images comprenant la partie de corps, les images ayant été acquises par le dispositif de capture vidéo 12. Au fur et à mesure des acquisitions d'images par le dispositif de capture vidéo 12, le calculateur 11 génère des images modifiées, en modifiant le positionnement dans les images d'acquisition de la partie de corps 2. Les images modifiées sont affichées sur l'écran d'affichage 13 pour un affichage à l'utilisateur 1 d'un retour vidéo biaisé de ladite partie de corps 2.

Par exemple, dans chaque image du flux vidéo d'images, le positionnement de la partie du corps 2 est modifié selon une transformation de type un agrandissement ou une réduction de dimension de la partie de corps, un décentrage de ladite partie de corps, une rotation de ladite partie de corps.

Par exemple, pour toutes les images du flux d'images, le même type de transformation est appliqué, et en particulier selon des paramètres déterminés.

Le même type transformation est appliqué sur toutes les images du flux d'images.

En particulier, les paramètres déterminés sont appliqués sur toutes les images du flux d'images.

Par exemple, pour une transformation de type agrandissement ou réduction, un paramètre de facteur d'agrandissement ou de réduction est déterminé et appliqué sur toutes les images du flux d'images.

Par exemple, pour une transformation de type décentrage, un paramètre de facteur de décentrage est déterminé et appliqué sur toutes les images du flux d'images. Un facteur de décentrage comprend par exemple une translation selon un changement de repère dans l'image.

Par exemple, pour une transformation de type rotation, un paramètre d'angle de rotation par rapport à un axe de rotation est déterminé et appliqué sur toutes les images du flux d'images.

Ainsi, le calculateur 11 génère des images modifiées correspondant à un retour biaisé en ce que le positionnement de la partie du corps 2 ne correspond pas au positionnement réel de la partie de corps, le retour biaisé étant cohérent en ce qu'un mouvement réel relatif de la partie de corps par rapport au dispositif électronique 10 est reproduit dans le retour biaisé. Par exemple, la partie de corps est une tête et l'utilisateur fait pivoter sa tête autour de son cou vers la droite depuis une première position de face par rapport par rapport au dispositif électronique jusqu'à une deuxième position de profil gauche par rapport par rapport au dispositif électronique. Dans le retour biaisé, l'utilisateur pivote sa tête autour de son cou vers la droite depuis une position de profil droit par rapport par rapport au dispositif électronique jusqu'à une position de face par rapport par rapport au dispositif électronique. Le mouvement de pivot à droite d'un angle de rotation prédéterminé est reproduit dans le retour biaisé, selon le même angle de rotation.

L'affichage d'un retour vidéo biaisé incite l'utilisateur 1 à modifier la position de la partie de corps 2 de façon intuitive pour suivre la consigne prédéterminée de positionnent.

Le positionnement est d'autant plus intuitif et naturel que l'utilisateur 1 ne sait pas que le retour vidéo est biaisé ou à minima de quelle manière il est biaisé. Croyant la partie de corps 2 mal positionnée, l'utilisateur modifie naturellement la position de ladite partie de corps.

Une aide visuelle ou audio peut de manière complémentaire guider l'utilisateur pour atteindre la consigne prédéterminée de positionnement, par exemple par l'affichage sur l'écran d'affichage 13 de flèches, de couleurs, de pictogrammes, de messages ou par l'émission de messages audio de guidage indiquant une direction ou un sens de déplacement à suivre.

L'utilisateur 1, pour suivre la consigne prédéterminée de positionnement pour la partie de corps 2 en regardant l'écran d'affichage 13, effectue une autocorrection en modifiant le positionnement de ladite partie de corps par rapport au dispositif électronique 10, pour tendre vers une position de la partie de corps 2 selon la consigne prédéterminée de positionnement.

Si le dispositif électronique 10 est fixe, l'utilisateur autocorrige le positionnement de la partie de corps 2 par rapport au dispositif électronique 10 en déplaçant ladite partie de corps 2, éventuellement en se déplaçant lui-même, mais ce n'est pas obligatoire. Par exemple, un utilisateur peut modifier la position de son visage en faisant pivoter sa tête autour de son cou, sans bouger son buste et sans se déplacer. Alternativement, un utilisateur peut tourner sur lui-même ou tourner autour du dispositif électronique 10 pour modifier la position de son visage par rapport au dispositif électronique tel que précédemment.

Si le dispositif électronique 10 est mobile, l'utilisateur peut autocorriger le positionnement de la partie de corps en déplaçant la partie de corps 2, éventuellement en se déplaçant lui-même et/ ou en déplaçant le dispositif électronique 10. Par exemple, si le dispositif électronique 10 est un téléphone portable que l'utilisateur tient dans sa main, l'utilisateur peut modifier la position de son visage en faisant pivoter sa tête autour de son cou, sans bouger le bras ni la main, en se déplaçant ou en restant immobile. L'utilisateur peut également bouger son bras de droite à gauche autour de son buste pour modifier la position de son visage par rapport au dispositif électronique 10 tel que précédemment.

Pendant cette étape de traitement 103, le calculateur 11 modifie les images acquises par le dispositif de capture vidéo 12 de telle façon qu'une position de ladite partie de corps 2 selon ladite consigne prédéterminée de positionnement sur l'écran d'affichage 13, donc dans les images modifiées du retour vidéo biaisé, correspond à une position de la partie de corps 2 selon la deuxième position dans une image d'acquisition par le dispositif de capture vidéo 12 non modifiée par le calculateur 11.

Les images sont modifiées de sorte que le déplacement de la partie de corps 2 sur le retour vidéo biaisé affiché sur l'écran d'affichage 13 est cohérent avec le changement de positionnement de la partie de corps 2 dans les images d'acquisition par le dispositif de capture vidéo 12, c'est-à-dire cohérent avec le changement de positionnement réel de la partie de corps 2 par rapport au dispositif électronique 10. Par exemple, un déplacement de la partie de corps par rapport au dispositif électronique 10 dans une direction, par exemple la droite, engendre un déplacement de la partie de corps dans la même direction dans le retour vidéo biaisé, ici vers la droite.

Les images sont modifiées de sorte que le déplacement de la partie de corps sur le retour vidéo biaisé affiché sur l'écran d'affichage 13 est continu.

Les images sont modifiées de sorte à faire croire à l'utilisateur 1 qu'il a mal positionné la partie de corps par rapport au dispositif électronique 10, par rapport à la consigne prédéterminée de positionnement et qu'une modification de position de la partie de corps par rapport au dispositif électronique 10 est nécessaire pour atteindre ladite consigne prédéterminée de positionnement.

Avantageusement, l'environnement de la partie de corps est partiellement ou totalement remplacé par un fond d'image prédéterminé tel qu'un fond de couleur unie. Cela évite au calculateur 11 de modifier dans les images l'environnement de la partie de corps pour conserver une continuité et une cohérence de l'environnement dans l'image modifiée. Ainsi, les aberrations d'environnement de la partie de corps 2 dans l'image modifiée sont évitées. Un fond neutre permet en outre de mettre en exergue la partie de corps 2 de l'utilisateur 1. Seul apparaît sur l'écran d'affichage 13 la partie de corps 2 de l'utilisateur 1, par exemple sur fond uni blanc ou noir.

Si l'étape de traitement 103 n'est pas interrompue et que l'utilisateur 1 modifie le positionnement de la partie de corps 2 selon ladite consigne prédéterminée de positionnement, alors, lorsque la partie de corps 2 est positionnée selon ladite consigne prédéterminée de positionnement sur l'écran d'affichage 13, et donc dans les images modifiées par le calculateur 11, la partie de corps 2 est positionnée selon la deuxième position dans les images non modifiées telles qu'acquises par le dispositif de capture vidéo 12.

Selon une étape de deuxième acquisition 104, le dispositif de capture vidéo 12 acquiert une deuxième image comprenant ladite partie de corps 2 de l'utilisateur, pendant l'étape de traitement 103.

Ainsi, le procédé d'imagerie permet d'acquérir une deuxième image de la partie de corps de l'utilisateur 1 dont la position correspond à une position intermédiaire ou finale de la partie de corps 2 sur un mouvement prédéterminé de la première position vers la deuxième position.

Préférentiellement, le dispositif de capture vidéo 12 acquiert pendant l'étape de traitement 103 une pluralité de deuxièmes images selon l'étape de deuxième acquisition 104, la position de la partie de corps dans chaque deuxième image étant différente.

Ainsi, pendant l'étape de traitement 103, le calculateur 11 modifie des images acquises par le dispositif de capture vidéo 12 au fur et à mesure des acquisitions, certaines de ces images acquises étant des deuxièmes images selon l'étape de deuxième acquisition 104.

Plusieurs deuxièmes images de la partie de corps sont acquises sur le mouvement prédéterminé de la partie de corps de la première position vers la deuxième position.

Avantageusement, la position de la partie de corps 2 dans chaque deuxième image est significativement différente, de manière à enrichir une base de données de deuxième images.

Par exemple, dans la pluralité de deuxièmes images, la partie de corps 2 est positionnée selon plusieurs orientations : de face, d'un quart, de trois-quarts, de côté.

Par exemple, dans la pluralité de deuxièmes images, la partie de corps 2 est excentrée de façon plus ou moins importante : au quart de la distance entre le centre et un bord de l'image, au tiers, à mi-distance, au deux-tiers, au trois-quarts.

Par exemple, dans la pluralité de deuxièmes images, la partie de corps 2 est grossie d'un facteur différent par rapport à la première position : 110%, 120%, 130%, 140%, 150%.

De manière avantageuse, la position de ladite partie de corps dans chaque deuxième image est différente de la deuxième position.

En effet, pour être sûr que l'utilisateur 1 positionne la partie de corps 2 selon une position cible, il est avantageux de choisir ladite position cible comme une position intermédiaire dans un mouvement entre la première position et une deuxième position. Ainsi, si l'utilisateur 1 a des difficultés pour autocorriger la position de la partie de corps 2 afin d'atteindre avec précision une position une selon la consigne prédéterminée sur l'écran d'affichage 13, c'est-à-dire la deuxième position dans une image non modifiée, la position cible sera tout de même atteinte pendant le mouvement d'autocorrection car c'est une position intermédiaire.

Selon un mode de réalisation, l'étape de traitement 103 prend fin lorsque la position de ladite partie de corps sur la deuxième image correspond à une troisième position prédéterminée différente de la deuxième position.

Dans le cas d'une étape de deuxième acquisition 104 comprenant l'acquisition d'une unique deuxième image, la partie de corps est positionnée selon la troisième position dans ladite unique deuxième image.

Dans le cas d'une étape de deuxième acquisition 104 comprenant l'acquisition d'une pluralité de deuxièmes images, la partie de corps est positionnée selon la troisième position dans la dernière deuxième image de la pluralité de deuxièmes images.

La troisième position est avantageusement la position cible, tel que décrit précédemment.

Selon un autre mode de réalisation, l'étape de traitement 103 prend fin lorsqu'il est détecté sur une deuxième image que d'autres deuxièmes images sur le déplacement de la partie de corps 2 entre la première position et la deuxième position ne sont plus utiles ou intéressantes pour le dispositif électronique 10 et/ou pour un dispositif annexe tel qu'un dispositif anti-fraude, de modélisation en trois dimensions ou de construction de données biométriques.

Par exemple si une deuxième image donne une information inattendue, il peut être opportun de mettre fin au déplacement de la partie de corps 2 en cours et d'engendrer un déplacement différent de la partie de corps 2 en réitérant le procédé d'imagerie avec une nouvelle deuxième position.

Par exemple, s'il apparaît dans une deuxième image qu'une tête d'un utilisateur ne comprend pas d'oreille gauche, il peut être opportun de faire tourner la tête de l'utilisateur vers la gauche pour vérifier si la tête comprend une oreille droite. Cette information peut être intéressante pour un dispositif anti-fraude pour confirmer une suspicion de fraude. Selon un autre mode de réalisation, l'étape de traitement 103 prend fin lorsque le nombre de deuxième images dépasse un seuil prédéterminé. Dans ce cas, ce n'est pas une position cible particulière qui est visée, mais l'acquisition d'images de la partie de corps dans des positions différentes, dans un mouvement prédéterminé, par exemple pour vérifier la cohérence du mouvement avec la consigne prédéterminée.

Un seuil prédéterminé est par exemple entre 2 et 6, de préférence 5.

La deuxième position résulte d'au moins une transformation parmi :
- un agrandissement ou une réduction de dimension de la partie de corps dans la première image,
- un décentrage de ladite partie de corps dans la première image,
- une rotation de ladite partie de corps dans la première image.

La deuxième position est choisie en fonction de la nature du déplacement de la partie de corps vis-à-vis du dispositif de capture vidéo souhaité, mais aussi d'un sens, d'une direction et d'une intensité.

Une deuxième position proche de la première position induit à un déplacement de faible intensité alors qu'une deuxième position éloignée en distance ou très différente en nature de la première position induit à un déplacement de forte intensité.

La direction est par exemple diagonale, horizontale, verticale ou définie par un angle par rapport à une direction de référence.

Un sens est par exemple, vers le haut, vers le bas, vers la droite, vers la gauche ou définie par rapport aux point cardinaux.

La nature correspond par exemple à une translation, une rotation, ou une combinaison des deux.

Une rotation est définie par rapport à un axe de rotation.

Pour une partie de corps 2 qui est un visage, une rotation plane d'un visage de face sur une image correspond à une rotation axiale du visage autour d'un axe passant par le nez, ce qui correspond à un mouvement d'inclinaison vers la droite ou vers la gauche de la tête d'un utilisateur qui se tient verticalement, par exemple debout ou assis.

Une rotation axiale d'un visage autour d'un axe passant par les oreilles correspond à un mouvement d'inclinaison de la tête d'un utilisateur qui se tient verticalement, par exemple debout ou assis, vers le haut ou vers le bas.

Une rotation axiale d'un visage autour d'un axe passant par le cou correspond à un mouvement de rotation de la tête d'un utilisateur qui se tient verticalement, par exemple debout ou assis, vers la gauche ou vers la droite.

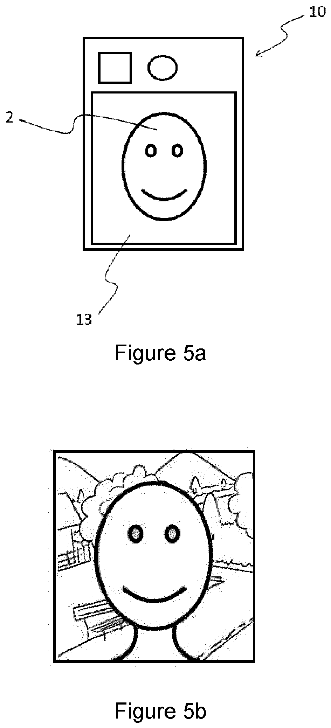

La figure 5a illustre le retour vidéo réel du visage d'un utilisateur 1 positionné selon une consigne prédéterminée de positionnement et à la manière d'une photo d'identité normalisée, visage entier, centré et de face. Dans l'exemple illustré, la première image est acquise selon ce positionnement qui correspond à une première position, comme représenté sur la figure 5b.

La figure 5b est une image acquise par le dispositif de capture vidéo 12, la partie de corps étant positionnée selon la première position.

L'utilisateur 1 est localisé dans un espace extérieur. On distingue sur la figure 5b un environnement de partie de corps 2 tel qu'un parc ou un jardin.

Sur la figure 5b, la première position est :
- une orientation de face,
- une localisation centrée dans l'image,
- une dimension correspondant à un facteur de grandissement 100% (ou un) du dispositif de capture vidéo 1.

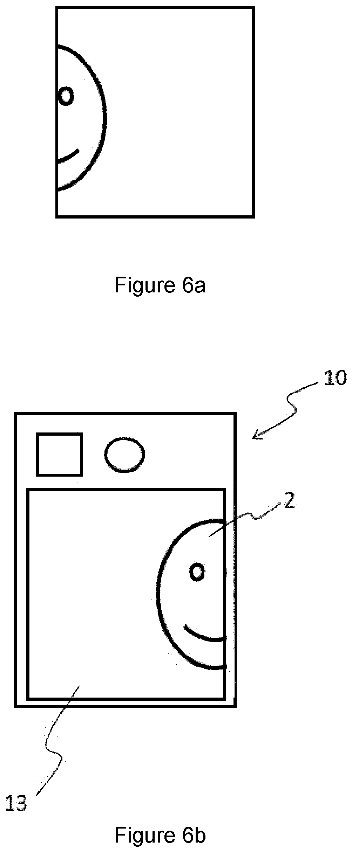

Les figures 6a, 7a, 8a, 9a illustrent des images de la partie de corps 2 selon une deuxième position.

Les figures 6b, 7b, 8b, 9b illustrent des images modifiées d'une image de la partie de corps 2 positionnée selon la première position. Ce sont donc des images de retour vidéo biaisé.

Les images sont modifiées par le calculateur 11 de façon à ce que, après une autocorrection de l'utilisateur 1 du positionnement de ladite partie de corps 2 selon la consigne prédéterminée de positionnement, ici tel que représenté sur la figure 5a, la partie de corps 2 est positionnée selon la deuxième position.

Ainsi, les figures 6b, 7b, 8b, 9b illustrent le retour vidéo biaisé d'images modifiées de l'image de la figure 5b, en vue d'un positionnement de la partie de corps 2 selon une deuxième position représentée respectivement sur les figures 6a, 7a, 8a, 9a. Ledit positionnement selon la deuxième position sera atteint lorsque sur l'écran d'affichage 13, l'utilisateur 1 aura positionné la partie de corps 2 selon la consigne prédéterminée de positionnement, ici tel que représenté sur la figure 5a.

Comme illustré sur les figures 6a à 9b, dans toutes les images modifiées, l'environnement autour de la partie de corps 2, ici le visage de l'utilisateur, est avantageusement remplacé par un fond de couleur blanche, de façon à éviter les aberrations dans l'environnement de la partie de corps, comme déjà décrit auparavant.

Avantageusement, dans l'image non modifiée de la figure 5a, affichée sur l'écran d'affichage 13, l'environnement autour de la partie de corps 2, ici le visage de l'utilisateur, est également remplacé par un fond de couleur blanche, de façon à éviter que l'utilisateur 1 ne distingue facilement un retour biaisé d'un retour vidéo réel ou en tout cas pour ne pas lui donner une indication sur le fait qu'un retour vidéo est biaisé.

A la place d'un fond de couleur blanche, un fond de couleur noire (non représenté) est particulièrement avantageux car cela permet d'attirer l'attention de l'utilisateur 1 sur la partie de corps 2 affichée sur l'écran d'affichage 13.

Sur la figure 6a, la deuxième position correspond à un décentrage vers la gauche de la partie de corps dans la première image tel que représenté figure 5b, un changement de positionnement de ladite partie de corps 2 depuis la première position et selon ladite consigne prédéterminée de positionnement correspondant à un déplacement de la partie de corps 2 vis-à-vis du dispositif de capture vidéo 12 dans un plan orthogonal à une ligne de visée dudit dispositif de capture vidéo 12.

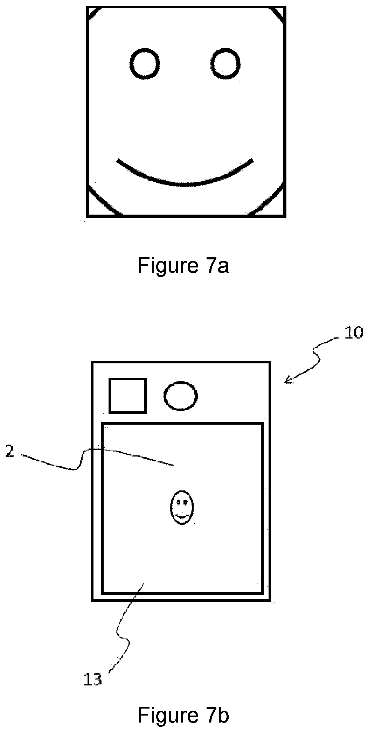

Sur la figure 7a, la deuxième position correspond à un agrandissement de dimension de la partie de corps dans la première image, un changement de positionnement de ladite partie de corps 2, depuis la première position et selon ladite consigne prédéterminée de positionnement, correspondant à un rapprochement de la partie de corps 2 vis-à-vis du dispositif de capture vidéo 12.

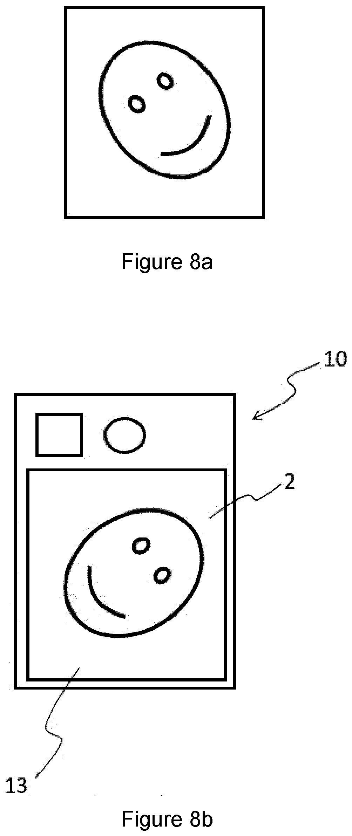

Sur la figure 8a, la deuxième position correspond à une rotation plane vers la gauche de ladite partie de corps dans la première image, un changement de positionnement de ladite partie de corps 2, depuis la première position et selon ladite consigne prédéterminée de positionnement, correspondant à une inclinaison vers la gauche de la partie de corps vis-à-vis du dispositif de capture vidéo 12.

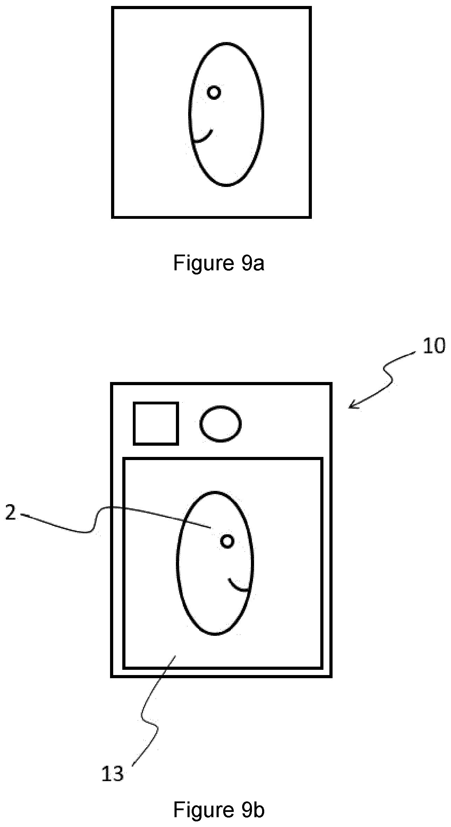

Sur la figure 9a, la deuxième position correspond à une rotation axiale de la tête vers la gauche de ladite partie de corps 2 dans la première image, un changement de positionnement de ladite partie de corps 2, depuis la première position et selon ladite consigne prédéterminée de positionnement, correspondant à une rotation axiale vers la gauche de la partie de corps vis-à-vis du dispositif de capture vidéo 12.

Dans le cas d'une transformation de rotation axiale, le calculateur 11 a besoin d'un modèle en trois dimension d'un visage, de préférence de celui de l'utilisateur 1, mais ce n'est pas obligatoire. Un modèle en trois dimensions d'un visage issu d'une base de données, correspondant à un visage réel ou non, peut être utilisé. Un réseau de neurones peut être avantageusement utilisé pour modifier l'image.

Les transformations d'agrandissement ou réduction de dimension, de décentrage et de rotation plane ne nécessitent pas de disposer de données complémentaires. Elles correspondent à un zoom, décadrage ou rotation d'une image.

Le changement de positionnement de la partie de corps 2 est décrit ci-dessus vis-à-vis du dispositif de capture vidéo 12, ce qui revient au même que de le décrire par rapport au dispositif électronique 10, le dispositif de capture vidéo 12 étant fixe et solidaire du dispositif électronique 10.

La deuxième position peut être déterminée en fonction d'une consigne d'un dispositif anti-fraude.

En effet, un dispositif anti-fraude peut avoir besoin de vérifier des détails de peau de l'utilisateur 1 pour déterminer si la partie de corps 2 est réelle ou si c'est une image ou une prothèse artificielle. Ainsi une deuxième position correspondant à un agrandissement de dimension de la partie de corps 2 dans la première image est intéressante.

Pour détecter une fraude plane, le dispositif anti-fraude a besoin d'une visibilité tridimensionnelle de ladite partie de corps 2. Ainsi une deuxième position correspondant à une rotation axiale de la partie de corps 2 dans la première image est intéressante.

Pour détecter un environnement non réel de la partie de corps, par exemple si la partie de corps 2 est imprimée sur une photographie, le dispositif anti-fraude a besoin de faire déplacer de ladite partie de corps 2 par rapport à l'environnement de ladite partie de corps. Ainsi une deuxième position correspondant à un décentrage de la partie de corps 2 dans la première image est intéressante. Même si dans les images modifiées, la partie de corps 2 est sur un fond prédéterminé, le calculateur dispose des images acquises par le dispositif de capture vidéo. Si la partie de corps 2 se déplace par rapport au dispositif électronique 10 de manière incohérente par rapport à l'environnement, une fraude peut être suspectée.

Alternativement ou complémentairement, la deuxième position peut être déterminée en fonction d'un dispositif de modélisation en trois dimensions.

Un dispositif de modélisation en trois dimensions a besoin d'images de la partie du corps 2 selon plusieurs points de vue différents pour construire un modèle en trois dimensions de ladite partie de corps 2. Ainsi une deuxième position correspondant à une rotation non plane de la partie de corps 2 dans la première image est intéressante.

Alternativement ou complémentairement, la deuxième position peut être déterminée en fonction d'un dispositif de construction de données biométriques, en particulier un dispositif de constructions d'images d'empreintes biométriques.

Un dispositif de construction de données biométriques d'un iris a par exemple besoin d'une image détaillée de l'iris de l'utilisateur 1 pour caractériser ses motifs. Ainsi une deuxième position correspondant à un agrandissement de dimension de la partie de corps 2 dans la première image est intéressante.

Dans ce cas, le dispositif de capture vidéo 12 est avantageusement apte à acquérir des images d'empreintes biométriques de ladite partie de corps 2 de l'utilisateur 1, la première image et au moins une deuxième image étant des images d'empreintes biométriques.

Dans le cas d'une partie de corps de doigt, il peut être opportun de faire tourner le doigt pour compléter une information biométrique d'empreinte digitale avec une information biométrique de bords de doigt pour obtenir une information biométrique d'enroulé. Ainsi une deuxième position correspondant à une rotation non plane de la partie de corps 2 dans la première image est intéressante. Ainsi, la deuxième position est déterminée en fonction d'une consigne d'un dispositif anti-fraude et/ou d'un dispositif de modélisation en trois dimensions et/ou d'un dispositif de construction de données biométriques, la ou des deuxièmes images étant envoyées après acquisition au dispositif anti-fraude et/ou au dispositif de modélisation en trois dimensions et/ou au dispositif de construction de données biométriques.

En effet, il peut être avantageux d'utiliser le même procédé d'imagerie pour alimenter en deuxièmes images plusieurs dispositifs annexes parmi par exemple un dispositif anti-fraude, un dispositif de modélisation en trois dimensions et un dispositif de construction de données biométriques.

Le dispositif électronique 10 et le dispositif anti-fraude, le dispositif de modélisation en trois dimensions ou le dispositif de construction de données biométriques peuvent être distincts.

Alternativement, le dispositif électronique 10 peut comprendre un dispositif anti-fraude, un dispositif de modélisation en trois dimensions ou un dispositif de construction de données biométriques. Le contrôleur 11 peut être commun aux dispositifs, par exemple en comprenant un algorithme anti-fraude, un algorithme de modélisation en trois dimensions ou un algorithme de construction de données biométriques.

Par exemple, une même image peut à la fois servir à construire un modèle d'une partie de corps en trois dimensions, construire une donnée biométrique telle qu'une image d'empreinte biométrique en vue de l'authentification de l'utilisateur et vérifier que l'utilisateur est légitime.

Alternativement ou complémentairement, la deuxième position peut être déterminée en fonction de la catégorie de ladite partie de corps 2.

Par exemple, une deuxième position correspondant à une rotation non plane d'un iris dans la première image n'est pas très pertinente pour construire des données biométriques d'un iris.

Il est également possible que le calculateur détermine la deuxième position en fonction d'une donnée aléatoire ou pseudo aléatoire.

Ainsi, la deuxième position et le déplacement d'autocorrection associé n'est pas prévisible par l'utilisateur 1.

La deuxième position étant associée à un déplacement de la partie de corps 2 vis-à-vis du dispositif de capture vidéo 12, le déplacement étant caractérisé par une nature, un sens, une direction et une intensité, la donnée aléatoire ou pseudo aléatoire peut être appliquée à la nature, le sens, la direction ou l'intensité ou à une combinaison de ces derniers.

Selon les besoins du dispositif électronique 10, et éventuellement indirectement d'un dispositif anti-fraude et/ou de modélisation en trois dimensions et/ou de construction de données biométriques, les étapes de première acquisition 100, de caractérisation 101, de détermination 102, de traitement 103 et de deuxième acquisition 104 peuvent être itérées plusieurs fois.

La deuxième position d'une itération du procédé d'imagerie est déterminée en fonction de la position de ladite partie de corps 2 sur une deuxième image dans l'itération précédente ou dans les itérations précédentes.

Dans le cas d'une pluralité de deuxième images, la deuxième position d'une itération du procédé d'imagerie est déterminée en fonction de la position de ladite partie de corps sur une image prédéterminée de la pluralité de deuxièmes images, en particulier en fonction d'une position cible tel que décrit précédemment dans l'itération précédente ou dans les itérations précédentes.

Selon un exemple de réalisation, le nombre d'itérations du procédé d'imagerie est fonction d'une instruction d'un dispositif anti-fraude, d'un dispositif de modélisation en trois dimensions, d'un dispositif de construction de données biométriques.

Par exemple, dans un cas où un dispositif anti-fraude a besoin d'images de cinq positions de la partie de corps 2 selon quatre mouvements prédéterminés vis-à-vis du dispositif de capture vidéo 12, l'étape de deuxième acquisition 104 du procédé d'imagerie comprend l'acquisition de cinq deuxièmes images, et le procédé d'imagerie est itéré quatre fois.

Cet exemple est applicable au cas du dispositif de modélisation en trois dimensions, et du dispositif de construction de données biométriques, les valeurs étant choisies pour illustrer l'exemple et n'étant pas limitatives.

Selon un autre exemple de réalisation, le nombre d'itérations du procédé d'imagerie est fonction de l'écoulement d'une durée prédéterminée.

Avantageusement, la consigne prédéterminée de positionnement est identique pour toutes les itérations du procédé d'imagerie.

Avantageusement encore, les itérations s'enchaînent sans que l'utilisateur en ai conscience, l'utilisateur autocorrigeant ou tentant d'autocorriger sans discontinuité la position de la partie de corps selon la consigne prédéterminée de positionnement.

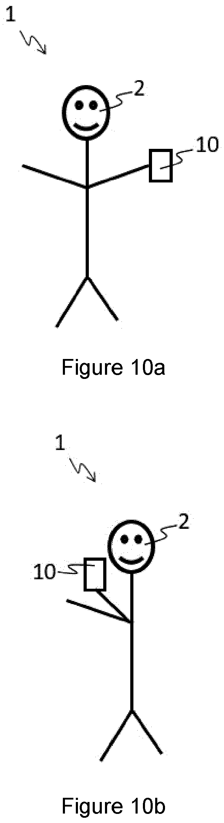

Les figures 10a et 10b illustrent une autocorrection d'un utilisateur 1 du positionnement de visage selon ladite consigne prédéterminée de positionnement, dans le cas d'un dispositif électronique 10 mobile tel qu'un téléphone portable.

La figure 10a représente la position du dispositif électronique 10 et de l'utilisateur 1 avant une exécution du procédé d'imagerie.

La figure 10b représente la position du dispositif électronique 10 et de l'utilisateur 1 après ou pendant l'exécution de l'étape de traitement 103 du procédé d'imagerie, l'utilisateur déplaçant son bras pour déplacer le dispositif électronique 10 disposé dans sa main pour effectuer l'autocorrection de placement.

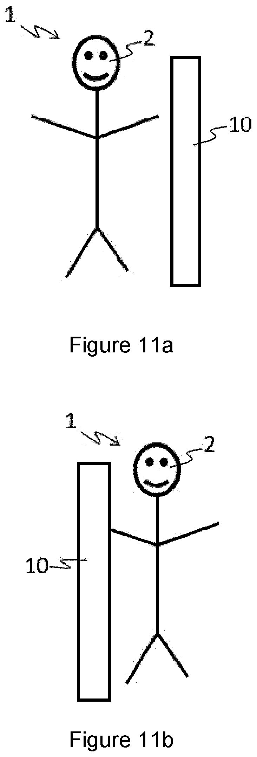

Les figures 11a et 11b illustrent une autocorrection d'un utilisateur 1 du positionnement de visage selon ladite consigne prédéterminée de positionnement, dans le cas d'un dispositif électronique 10 fixe tel qu'une borne.

La figure 11a représente la position du dispositif électronique 10 et de l'utilisateur 1 avant une exécution du procédé d'imagerie.

La figure 11b représente la position du dispositif électronique 10 et de l'utilisateur 1 après ou pendant l'exécution de l'étape de traitement 103 du procédé d'imagerie, l'utilisateur se déplaçant autour du dispositif électronique 10 pour effectuer l'autocorrection de placement.

Pour éviter que le procédé d'imagerie ne soit trompé par un utilisateur illégitime rejouant une précédente exécution du procédé d'imagerie, l'invention concerne également un procédé anti-rejeu.

Le procédé anti-rejeu comprend le procédé d'imagerie décrit ci-dessus, l'étape de deuxième acquisition 104 comprenant l'acquisition d'une pluralité de deuxièmes images par le dispositif de capture vidéo 12, et comprend en outre une étape de vérification 105 dans laquelle le calculateur 11 vérifie que l'autocorrection du positionnement de ladite partie de corps de l'utilisateur selon ladite consigne prédéterminée de positionnement, par l'utilisateur 1, est cohérente.

Le calculateur 11 vérifie dans la pluralité de deuxièmes images que le changement de position de la partie du corps 2 est cohérent en fonction de la première position et de la deuxième position.

Avantageusement, le calculateur 11 calcule une note de cohérence.

Par comparaison de la note de cohérence à un seuil de cohérence prédéterminé, le calculateur 11 détermine si l'utilisateur 1 fraude, par exemple en rejouant une précédente exécution du procédé ou en diffusant une vidéo enregistrée avec des changements de positionnement de ladite partie de corps selon des positions aléatoires, ou bien s'il ne fraude pas.

Si le calculateur 11 a besoin de plus de données pour générer une note de cohérence consolidée, le procédé d'imagerie peut être itéré plusieurs fois. Ainsi, le calculateur 11 peut vérifier la cohérence de position de ladite partie de corps de l'utilisateur sur plusieurs déplacements entre une première position vers une deuxième position.

Le vérification de la cohérence d'un déplacement comprend la vérification d'au moins un paramètre parmi :
- une direction de déplacement,
- un sens de déplacement,
- une intensité de déplacement,
- un mouvement de déplacement, par exemple une rotation, une translation, une inclinaison, un basculement, un enroulement.

De manière analogue, la calculateur 11 peut calculer une probabilité de fraude et la comparer à un seuil de fraude prédéterminé.

## Revendications

1. Procédé d'imagerie d'une partie de corps (2) d'un utilisateur (1) selon une consigne prédéterminée de positionnement par un système comprenant un calculateur (11) et un dispositif électronique (10) comportant un dispositif de capture vidéo (12) apte à acquérir des images de ladite partie de corps (2) de l'utilisateur et un écran d'affichage (13), le procédé comprenant les étapes suivantes :
- une étape de première acquisition (100) par le dispositif de capture vidéo (12), d'une première image comprenant ladite partie de corps (2) de l'utilisateur,
- une étape de caractérisation (101) dans ladite première image par le calculateur (11), d'une première position de la partie de corps (2) de l'utilisateur,
- une étape de détermination (102) par le calculateur, d'une deuxième position de ladite partie de corps de l'utilisateur différente de la première position,
- une étape de traitement (103) dans laquelle le calculateur (11) récupère un flux vidéo d'images acquises par le dispositif de capture vidéo (12) et comprenant ladite partie de corps (2), génère des images modifiées au fur et à mesure des acquisitions d'images dudit flux vidéo en modifiant dans les images d'acquisition le positionnement de la partie de corps (2), pour un affichage sur l'écran d'affichage d'un retour vidéo biaisé correspondant auxdites images modifiées, de manière à engendrer une autocorrection de l'utilisateur (1) du positionnement de ladite partie de corps selon ladite consigne prédéterminée de positionnement, la modification des images étant telle qu'une position de ladite partie de corps (2) selon ladite consigne prédéterminée de positionnement sur l'écran d'affichage (13) correspond à une position de la partie de corps (2) selon ladite deuxième position dans une image d'acquisition par le dispositif de capture vidéo (12), et de sorte que le déplacement de la partie de corps (2) sur le retour vidéo biaisé est cohérent avec le changement de positionnement de la partie de corps (2) dans les images d'acquisition, un déplacement de la partie de corps par rapport au dispositif électronique (10) dans une direction engendrant un déplacement de la partie de corps dans la même direction dans le retour vidéo biaisé,
- une étape de deuxième acquisition (104) par le dispositif de capture vidéo (12), d'une deuxième image comprenant ladite partie de corps (2) de l'utilisateur, pendant l'étape de traitement (103).

2. Procédé d'imagerie d'une partie de corps (2) selon la revendication précédente, la position de ladite partie de corps dans la deuxième image étant différente de la deuxième position.

3. Procédé d'imagerie d'une partie de corps (2) selon l'une quelconque des revendications précédentes, l'étape de deuxième acquisition (104) comprenant l'acquisition d'une pluralité de deuxièmes images par le dispositif de capture vidéo (12), la position de la partie de corps dans chaque deuxième image étant différente.

4. Procédé d'imagerie d'une partie de corps (2) selon la revendication 3, l'étape de traitement prenant fin lorsque la position de ladite partie de corps sur la deuxième image correspond à une troisième position prédéterminée différente de la deuxième position.

5. Procédé d'imagerie d'une partie de corps (2) selon la revendication 3, l'étape de traitement prenant fin lorsque le nombre de deuxièmes images dépasse un seuil prédéterminé.

6. Procédé d'imagerie d'une partie de corps (2) selon l'une quelconque des revendications précédentes, la deuxième position résultant d'au moins une transformation parmi :
- un agrandissement ou une réduction de dimension de la partie de corps (2) dans la première image,
- un décentrage de ladite partie de corps dans la première image,
- une rotation de ladite partie de corps dans la première image,
un changement de positionnement de ladite partie de corps depuis la première position et selon ladite consigne prédéterminée de positionnement correspondant à un mouvement prédéterminé de ladite partie de corps (2) vis-à-vis du dispositif de capture vidéo (12), le mouvement prédéterminé étant respectivement au moins un mouvement parmi :
- un rapprochement ou un éloignement,
- un déplacement dans un plan orthogonal à une ligne de visée dudit dispositif de capture vidéo (12),
- un déplacement rotatif.

7. Procédé d'imagerie d'une partie de corps (2) selon l'une quelconque des revendications précédentes, la consigne prédéterminée de positionnement de ladite partie de corps de l'utilisateur comprenant l'affichage sur l'écran d'affichage (13), en superposition, d'une cible (30) de positionnement dont la localisation et la dimension sont fixes par rapport audit écran d'affichage (13).

8. Procédé d'imagerie d'une partie de corps (2) selon l'une quelconque des revendications précédentes, la deuxième position étant déterminée en fonction d'une consigne d'un dispositif anti-fraude et/ou d'un dispositif de modélisation en trois dimensions et/ou d'un dispositif de construction de données biométriques.

9. Procédé d'imagerie d'une partie de corps (2) selon la revendication précédente, la deuxième position étant déterminée en fonction d'une donnée aléatoire ou pseudo aléatoire.

10. Procédé d'imagerie d'une partie de corps (2) selon l'une quelconque des revendications précédentes, les étapes de première acquisition (100), de caractérisation (101), de détermination (102), de traitement (103) et de deuxième acquisition (104) étant itérées plusieurs fois.

11. Procédé d'imagerie d'une partie de corps (2) selon la revendication précédente, la deuxième position d'une itération du procédé d'imagerie étant déterminée en fonction de la position de ladite partie de corps sur la deuxième image ou sur une deuxième image prédéterminée d'une pluralité de deuxième images de l'étape de deuxième acquisition (104) dans l'itération du procédé d'imagerie précédente, ou d'un historique des positions de ladite partie de corps sur la deuxième image ou sur une deuxième image prédéterminée d'une pluralité de deuxième images de l'étape de deuxième acquisition (104) des itérations du procédé d'imagerie précédentes.

12. Procédé d'imagerie d'une partie de corps (2) selon l'une quelconque des revendications 10 ou 11, le nombre d'itérations étant fonction d'une instruction d'un dispositif anti-fraude et/ou d'un dispositif de modélisation en trois dimensions et/ou d'un dispositif de construction de données biométriques, ou bien de l'écoulement d'une durée prédéterminée.

13. Procédé d'imagerie d'une partie de corps (2) selon l'une quelconque des revendications précédentes, ladite partie de corps (2) étant un visage.

14. Procédé anti-rejeu d'un déplacement d'une partie de corps (2) comprenant un procédé d'imagerie de ladite partie de corps (2) selon la revendication 3 ou selon l'une quelconque des revendications précédentes lorsqu'elle dépend de la revendication 3, le procédé anti-rejeu comprenant une étape de vérification (105) par le calculateur (11) d'une autocorrection cohérente de l'utilisateur (1) du positionnement de ladite partie de corps de l'utilisateur selon ladite consigne prédéterminée de positionnement pendant l'étape étape de traitement (103), par la vérification d'un changement cohérent de la position de la partie de corps (2) dans la pluralité de deuxièmes images en fonction de la première position et de la deuxième position.

15. Produit programme d'ordinateur comprenant les instructions de programme mettant en œuvre les étapes du procédé d'imagerie selon l'une quelconque des revendications 1 à 13, lorsque les instructions de programme sont exécutées par un ordinateur.

## Patentansprüche

1. Verfahren zur Abbildung eines Körperteils (2) eines Benutzers (1) gemäß einer vorbestimmten Positionierungsvorgabe durch ein System, umfassend einen Rechner (11) und eine elektronische Vorrichtung (10), die eine Videoaufnahmevorrichtung (12), die geeignet ist, Bilder des Körperteils (2) des Benutzers zu erfassen, und einen Anzeigebildschirm (13) beinhaltet, wobei das Verfahren die folgenden Schritte umfasst:
- einen Schritt des ersten Erfassens (100) eines ersten Bilds, das den Körperteil (2) des Benutzers umfasst, durch die Videoaufnahmevorrichtung (12),
- einen Schritt des Charakterisierens (101) einer ersten Position des Körperteils (2) des Benutzers in dem ersten Bild durch den Rechner (11),
- einen Schritt des Bestimmens (102) einer zweiten Position des Körperteils des Benutzers, die von der ersten Position verschieden ist, durch den Rechner,
- einen Schritt des Verarbeitens (103), bei dem der Rechner (11) einen Videostrom aus Bildern abruft, die von der Videoaufnahmevorrichtung (12) erfasst wurden und den Körperteil (2) umfassen, geänderte Bilder im Zuge der Erfassungen von Bildern des Videostroms erzeugt, indem in den Erfassungsbildern die Positionierung des Körperteils (2) geändert wird, zwecks Anzeige auf dem Anzeigebildschirm eines verzerrten Video-Feedbacks, das den geänderten Bildern entspricht, so dass eine Autokorrektur des Benutzers (1) der Positionierung des Körperteils gemäß der vorbestimmten Positionierungsvorgabe bewirkt wird, wobei die Änderung der Bilder dergestalt ist, dass eine Position des Körperteils (2) gemäß der vorbestimmten Positionierungsvorgabe auf dem Anzeigebildschirm (13) einer Position des Körperteils (2) gemäß der zweiten Position in einem Erfassungsbild durch die Videoaufnahmevorrichtung (12) entspricht, und so, dass die Verlagerung des Körperteils (2) auf dem verzerrten Video-Feedback mit dem Positionierungswechsel des Körperteils (2) in den Erfassungsbildern kohärent ist, wobei eine Verlagerung des Körperteils in Bezug auf die elektronische Vorrichtung (10) in eine Richtung eine Verlagerung des Körperteils in dieselbe Richtung in dem verzerrten Video-Feedback bewirkt,
- einen Schritt des zweiten Erfassens (104) eines zweiten Bilds, das den Körperteil (2) des Benutzers umfasst, durch die Videoaufnahmevorrichtung (12) während des Schritts des Verarbeitens (103).

2. Verfahren zur Abbildung eines Körperteils (2) nach dem vorhergehenden Anspruch, wobei die Position des Körperteils in dem zweiten Bild von der zweiten Position verschieden ist.

3. Verfahren zur Abbildung eines Körperteils (2) nach einem der vorhergehenden Ansprüche, wobei der Schritt des zweiten Erfassens (104) das Erfassen einer Mehrzahl von zweiten Bildern durch die Videoaufnahmevorrichtung (12) umfasst, wobei die Position des Körperteils in jedem zweiten Bild verschieden ist.

4. Verfahren zur Abbildung eines Körperteils (2) nach Anspruch 3, wobei der Schritt des Verarbeitens endet, wenn die Position des Körperteils auf dem zweiten Bild einer dritten vorbestimmten Position entspricht, die von der zweiten Position verschieden ist.

5. Verfahren zur Abbildung eines Körperteils (2) nach Anspruch 3, wobei der Schritt des Verarbeitens endet, wenn die Anzahl von zweiten Bildern einen vorbestimmten Schwellenwert überschreitet.

6. Verfahren zur Abbildung eines Körperteils (2) nach einem der vorhergehenden Ansprüche, wobei die zweite Position aus mindestens einer Transformation resultiert unter:
- einer Vergrößerung oder einer Verkleinerung des Körperteils (2) in dem ersten Bild,
- einer Dezentrierung des Körperteils in dem ersten Bild,
- einer Rotation des Körperteils in dem ersten Bild, wobei ein Positionierungswechsel des Körperteils von der ersten Position aus und gemäß der vorbestimmten Positionierungsvorgabe einer vorbestimmten Bewegung des Körperteils (2) gegenüber der Videoaufnahmevorrichtung (12) entspricht, wobei die vorbestimmte Bewegung mindestens eine Bewegung ist unter:
- einer Annäherung oder einer Entfernung,
- einer Verlagerung in einer senkrecht zu einer Sichtlinie der Videoaufnahmevorrichtung (12) verlaufenden Ebene,
- einer rotatorischen Verlagerung.

7. Verfahren zur Abbildung eines Körperteils (2) nach einem der vorhergehenden Ansprüche, wobei die vorbestimmte Positionierungsvorgabe für den Körperteil des Benutzers die Anzeige auf dem Anzeigebildschirm (13), in Überlagerung, einer Zielscheibe (30) zur Positionierung umfasst, deren Lage und Größe in Bezug auf den Anzeigebildschirm (13) festgelegt sind.

8. Verfahren zur Abbildung eines Körperteils (2) nach einem der vorhergehenden Ansprüche, wobei die zweite Position in Abhängigkeit von einer Anweisung einer Betrugsverhinderungsvorrichtung und/oder einer Vorrichtung zur dreidimensionalen Modellierung und/oder einer Vorrichtung zur Erstellung von biometrischen Daten bestimmt wird.

9. Verfahren zur Abbildung eines Körperteils (2) nach dem vorhergehenden Anspruch, wobei die zweite Position in Abhängigkeit von einem zufälligen oder pseudozufälligen Datenelement bestimmt wird.

10. Verfahren zur Abbildung eines Körperteils (2) nach einem der vorhergehenden Ansprüche, wobei die Schritte des ersten Erfassens (100), des Charakterisierens (101), des Bestimmens (102), des Verarbeitens (103) und des zweiten Erfassens (104) mehrmals wiederholt werden.

11. Verfahren zur Abbildung eines Körperteils (2) nach dem vorhergehenden Anspruch, wobei die zweite Position einer Wiederholung des Verfahrens zur Abbildung in Abhängigkeit von der Position des Körperteils auf dem zweiten Bild oder auf einem vorbestimmten zweiten Bild einer Mehrzahl von zweiten Bildern des Schritts des zweiten Erfassens (104) bei der vorhergehenden Wiederholung des Verfahrens zur Abbildung oder von einer Historie der Positionen des Körperteils auf dem zweiten Bild oder auf einem vorbestimmten zweiten Bild einer Mehrzahl von zweiten Bildern des Schritts des zweiten Erfassens (104) der vorhergehenden Wiederholungen des Verfahrens zur Abbildung bestimmt wird.

12. Verfahren zur Abbildung eines Körperteils (2) nach einem der Ansprüche 10 oder 11, wobei die Anzahl von Wiederholungen von einer Anweisung einer Betrugsverhinderungsvorrichtung und/oder einer Vorrichtung zur dreidimensionalen Modellierung und/oder einer Vorrichtung zur Erstellung von biometrischen Daten oder aber vom Ablauf einer vorbestimmten Dauer abhängig ist.

13. Verfahren zur Abbildung eines Körperteils (2) nach einem der vorhergehenden Ansprüche, wobei der Körperteil (2) ein Gesicht ist.

14. Verfahren zum Verhindern des Wiedereinspielens einer Verlagerung eines Körperteils (2), umfassend ein Verfahren zur Abbildung des Körperteils (2) nach Anspruch 3 oder nach einem der vorherigen Ansprüche, wenn dieser von Anspruch 3 abhängt, wobei das Verfahren zum Verhindern des Wiedereinspielens einen Schritt des Überprüfens (105), durch den Rechner (11), einer kohärenten Autokorrektur des Benutzers (1) der Positionierung des Körperteils des Benutzers gemäß der vorbestimmten Positionierungsvorgabe während des Schritts Schritts des Verarbeitens (103) umfasst, durch die Überprüfung eines kohärenten Wechsels der Position des Körperteils (2) in der Mehrzahl von zweiten Bildern in Abhängigkeit von der ersten Position und von der zweiten Position.

15. Computerprogrammprodukt, das Programmanweisungen umfasst, die bei der Ausführung der Programmanweisungen durch einen Computer die Schritte des Verfahrens zur Abbildung nach einem der Ansprüche 1 bis 13 ausführen.

## Claims

1. Method for imaging a body part (2) of a user (1) according to a predetermined positioning instruction by means of a system comprising a computer (11) and an electronic device (10) comprising a video-capturing device (12) able to acquire images of said body part (2) of the user and a display screen (13), the method comprising the following steps:
- a first step (100) of acquiring, by means of the video-capturing device (12), a first image containing said body part (2) of the user,
- a step (101) of **characterizing, in** said first image, by means of the computer (11), a first position of the body part (2) of the user,
- a step (102) of determining, by means of the computer, a second position of said body part of the user different from the first position,
- a processing step (103) in which the computer (11) retrieves a video stream of images acquired by the video-capturing device (12) and containing said body part (2), generates modified images as the images of said video stream are acquired by modifying, in the acquired images, the positioning of the body part (2), with a view to displaying, on the display screen, doctored video feedback corresponding to said modified images, so as to engender a self-correction by the user (1) of the positioning of said body part according to said predetermined positioning instruction, the modification of the images being such that a position of said body part (2) according to said predetermined positioning instruction on the display screen (13) corresponds to a position of the body part (2) according to said second position in an image acquired by the video-capturing device (12), and so that the movement of the body part (2) in the doctored video feedback is consistent with the change in positioning of the body part (2) in the acquired images, a movement of the body part with respect to the electronic device (10) in a direction engendering a movement of the body part in the same direction in the doctored video feedback,
- a second step (104) of acquiring, by means of the video-capturing device (12), a second image containing said body part (2) of the user, during the processing step (103).

2. Method for imaging a body part (2) according to the preceding claim, the position of said body part in the second image being different from the second position.

3. Method for imaging a body part (2) according to any one of the preceding claims, the second acquiring step (104) comprising acquiring a plurality of second images by means of the video-capturing device (12), the position of the body part in each second image being different.

4. Method for imaging a body part (2) according to Claim 3, the processing step terminating when the position of said body part in the second image corresponds to a predetermined third position different from the second position.

5. Method for imaging a body part (2) according to Claim 3, the processing step terminating when the number of second images exceeds a predetermined threshold.

6. Method for imaging a body part (2) according to any one of the preceding claims, the second position resulting from at least one transformation among:
- enlarging or decreasing the size of the body part (2) in the first image,
- decentring said body part in the first image,
- rotating said body part in the first image,
a change in positioning of said body part from the first position and according to said predetermined positioning instruction corresponding to a predetermined movement of said body part (2) vis-à-vis the video-capturing device (12), the predetermined movement being respectively at least one movement among:
- a movement towards or away,
- a movement in a plane orthogonal to a line of sight of said video-capturing device (12),
- a rotary movement.

7. Method for imaging a body part (2) according to any one of the preceding claims, the predetermined instruction regarding positioning of said body part of the user comprising displaying on the display screen (13), in superposition, a positioning target (30) the location and size of which are set with respect to said display screen (13).

8. Method for imaging a body part (2) according to any one of the preceding claims, the second position being determined depending on an instruction from an anti-fraud device and/or from a device for performing three-dimensional modelling and/or from a device for constructing biometric data.

9. Method for imaging a body part (2) according to the preceding claim, the second position being determined depending on a random or pseudo-random datum.

10. Method for imaging a body part (2) according to any one of the preceding claims, the first acquiring step (100),
the characterizing step (101), the determining step (102), the processing step (103), and the second acquiring step (104) being iterated a plurality of times.

11. Method for imaging a body part (2) according to the preceding claim, the second position of an iteration of the imaging method being determined depending on the position of said body part in the second image or in a predetermined second image of a plurality of second images of the second acquiring step (104) in the preceding iteration of the imaging method, or on a history of the positions of said body part in the second image or in a predetermined second image of a plurality of second images of the second acquiring step (104) of preceding iterations of the imaging method.

12. Method for imaging a body part (2) according to either one of Claims 10 and 11, the number of iterations being dependent on an instruction from an anti-fraud device and/or from a device for performing three-dimensional modelling and/or from a device for constructing biometric data, or indeed on elapse of a predetermined length of time.

13. Method for imaging a body part (2) according to any one of the preceding claims, said body part (2) being a face.

14. Anti-replay method, for preventing replay of a movement of a body part (2), comprising a method for imaging said body part (2) according to Claim 3 or according to any one of the preceding claims when dependent on Claim 3, the anti-replay method comprising a step (105) of verifying, by means of the computer (11), whether a self-correction by the user (1) of the positioning of said body part of the user is consistent with said predetermined positioning instruction during the processing step (103), by verifying that a change in the position of the body part (2) in the plurality of second images is consistent with the first position and the second position.

15. Computer program product comprising program instructions implementing the steps of the imaging method according to any one of Claims 1 to 13, when the program instructions are executed by a computer.
